(19) Europäisches Patentamt
European Patent Office
Office européen des brevets

(11) **EP 4 358 390 A1**

(12) **EUROPÄISCHE PATENTANMELDUNG**

(43) Veröffentlichungstag:
**24.04.2024  Patentblatt 2024/17**

(21) Anmeldenummer: **22201841.8**

(22) Anmeldetag: **17.10.2022**

(51) Internationale Patentklassifikation (IPC):
*H02M 7/5387* (2007.01)    *H02M 7/5395* (2006.01)
*H02M 1/00* (2006.01)    *H02M 1/12* (2006.01)
*H02M 1/44* (2007.01)

(52) Gemeinsame Patentklassifikation (CPC):
**H02M 7/5387; H02M 1/0009; H02M 1/0025;
H02M 1/126; H02M 1/44; H02M 7/5395**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder:
• **Benesch, Norbert
90562 Heroldsberg (DE)**
• **Wedel, Bernd
91096 Möhrendorf (DE)**

(74) Vertreter: **Siemens Patent Attorneys
Postfach 22 16 34
80506 München (DE)**

(54) **BETREIBEN VON SCHALTELEMENTEN EINES WECHSELRICHTERS**

(57)    Die Erfindung betrifft ein Verfahren zum Betreiben von Schaltelementen (24) eines Wechselrichters (20), der mit einer mehrphasigen Wechselspannung (16) elektrisch gekoppelt ist, wobei der Wechselrichter für jede der Phasen der mehrphasigen Wechselspannung wenigstens eine Reihenschaltung (22) aus den Schaltelementen (24) aufweist, um die mehrphasige Wechselspannung mit einem am Wechselrichter angeschlossenen Gleichspannungszwischenkreis (28) elektrisch zu koppeln, indem die Schaltelemente der Reihenschaltungen mit Schaltsignalen (40) beaufschlagt werden, wobei die Schaltsignale basierend auf einem Taktsignal unter Nutzung einer Pulsweitenmodulation ermittelt werden, wobei abhängig von Phasenströmen und einer Zwischenkreisgleichspannung basierend auf einer feldorientierten Regelung (36) ein Raumzeiger ermittelt wird und die Schaltsignale abhängig vom Raumzeiger und unter Nutzung von Phasensollspannungen bestimmt werden.

Erfindungsgemäß wird dem Raumzeiger zum Bestimmen der Schaltsignale ein Dämpfungsraumzeiger überlagert, der abhängig von den Phasenströmen bestimmt wird, sodass Phasenlagen der Phasensollspannungen in Bezug auf wenigstens eine vorgegebene Frequenz, die größer als die Grundschwingung ist, um einen vorgegebenen Phasenwert verschoben werden.

FIG 4

EP 4 358 390 A1

**Beschreibung**

Die Erfindung betrifft ein Verfahren zum Betreiben von Schaltelementen eines Wechselrichters, der mit einer mehrphasigen Wechselspannung eines Wechselspannungsnetzes über ein wechselspannungsseitiges Filter elektrisch gekoppelt ist, wobei der Wechselrichter für jede der Phasen der mehrphasigen Wechselspannung wenigstens eine Reihenschaltung aus den Schaltelementen aufweist, um die mehrphasige Wechselspannung mit einem am Wechselrichter angeschlossenen Gleichspannungszwischenkreis elektrisch zu koppeln, indem die Schaltelemente der Reihenschaltungen mit Schaltsignalen beaufschlagt werden, wobei die Schaltsignale basierend auf einem Taktsignal unter Nutzung einer Pulsweitenmodulation ermittelt werden, zu welchem Zweck die Phasenströme von Phasen der mehrphasigen Wechselspannung und eine Zwischenkreisgleichspannung erfasst werden, wobei eine Taktperiode des Taktsignals kleiner als eine Schwingungsperiode einer Grundschwingung der Phasenspannungen ist, wobei abhängig von den erfassten Phasenströmen und der erfassten Zwischenkreisgleichspannung basierend auf einer feldorientierten Regelung ein Raumzeiger ermittelt wird und die Schaltsignale abhängig vom Raumzeiger mittels einer Raumzeigermodulation und unter Nutzung von Phasensollspannungen bestimmt werden. Weiterhin betrifft die Erfindung eine Steuereinrichtung zum Betreiben von Schaltelementen eines Wechselrichters, der mit einer mehrphasigen Wechselspannung eines Wechselspannungsnetzes über ein wechselspannungsseitiges Filter elektrisch gekoppelt ist, wobei der Wechselrichter für jede der Phasen der mehrphasigen Wechselspannung wenigstens eine Reihenschaltung aus den Schaltelementen aufweist, wobei die Steuereinrichtung ausgebildet ist, die Schaltelemente der Reihenschaltungen mit Schaltsignalen zu beaufschlagen, um die mehrphasige Wechselspannung mit einem am Wechselrichter angeschlossenen Gleichspannungszwischenkreis elektrisch zu koppeln, die Schaltsignale basierend auf einem Taktsignal unter Nutzung einer Pulsweitenmodulation zu ermitteln, zu welchem Zweck die Phasenströme von Phasen der mehrphasigen Wechselspannung und eine Zwischenkreisgleichspannung erfasst werden, wobei eine Taktperiode des Taktsignals kleiner als eine Schwingungsperiode einer Grundschwingung der Phasenspannungen ist, und abhängig von den erfassten Phasenströmen und der erfassten Zwischenkreisgleichspannung basierend auf einer feldorientierten Regelung einen Raumzeiger zu ermitteln und die Schaltsignale abhängig vom Raumzeiger mittels einer Raumzeigermodulation und unter Nutzung von Phasensollspannungen zu bestimmen. Schließlich betrifft die Erfindung auch einen Energiewandler zum elektrischen Koppeln einer mehrphasigen elektrischen Wechselspannung eines Wechselspannungsnetzes mit einem Gleichspannungszwischenkreis, mit einem Wechselrichter, der der Wechselrichter für jede der Phasen der mehrphasigen Wechselspannung wenigstens eine Reihenschaltung aus den Schaltelementen aufweist, wobei eine jeweilige Reihenschaltung mit dem Gleichspannungszwischenkreis elektrisch gekoppelt und ein jeweiliger Mittelanschluss einer jeweiligen Reihenschaltung mit einer jeweiligen Phase der mehrphasigen Wechselspannung elektrisch koppelbar ist, einem wechselspannungsseitigen Filter zum elektrischen Koppeln des Wechselrichters mit der mehrphasigen Wechselspannung, und einer Steuereinrichtung zum Betreiben der Schaltelemente des Wechselrichters.

Energiewandler mit Wechselrichtern, Steuereinrichtungen hierfür sowie Verfahren zum Betreiben von Schaltelementen von Wechselrichtern sind im Stand der Technik umfänglich bekannt, sodass es eines gesonderten druckschriftlichen Nachweises hierzu nicht bedarf. Heutzutage werden elektrische Energiewandler, auch elektrische Energieumformer genannt, in Form sogenannter statischer Energiewandler beziehungsweise Energieumformer eingesetzt, das heißt, dass sie anders als dynamische Energiewandler keine mechanisch bewegbaren, insbesondere rotierbaren, Teile für den Zweck der Energiewandlung aufzuweisen brauchen. Statische Energiewandler sind in der Regel als getaktete elektrische Energiewandler ausgebildet und weisen zu diesem Zweck wenigstens einen Wechselrichter mit Schaltelementen auf, die in geeigneter Weise miteinander verschaltet und zum Beispiel an Phasenanschlüsse, kurz Phasen genannt, einer mehrphasigen Wechselspannung sowie zumindest teilweise an einen Gleichspannungszwischenkreis angeschlossen sind, um die mehrphasige Wechselspannung mit dem Gleichspannungszwischenkreis elektrisch zu koppeln, sodass durch Betreiben der Schaltelemente in einem geeigneten Schaltbetrieb die gewünschte Wandlungsfunktion des Energiewandlers erreicht werden kann.

Ein Schaltelement im Sinne dieser Offenbarung ist dabei vorzugsweise ein steuerbares elektronisches Schaltelement, beispielsweise ein steuerbarer elektronischer Halbleiterschalter wie ein Transistor, ein Thyristor, Kombinationsschaltungen hiervon, vorzugsweise mit parallelgeschalteten Freilaufdioden, ein Gate-Turn-Off-Thyristor (GTO), ein Insulated-Gate-Bipolar-Transistor (IGBT), Kombinationen hiervon oder dergleichen. Dem Grunde nach kann das Schaltelement auch durch einen Feldeffekttransistor, insbesondere einen Metal-Oxide-Semiconductor-Field-Effect-Transistor (MOSFET) gebildet sein.

Zur Bereitstellung der gewünschten Energiewandlungsfunktionalität werden die Schaltelemente im Schaltbetrieb betrieben. In Bezug auf einen Halbleiterschalter nach Art eines Transistors bedeutet dies, dass in einem eingeschalteten Schaltzustand zwischen den eine Schaltstrecke bildenden Anschlüssen des Transistors ein sehr geringer elektrischer Widerstand bereitgestellt wird, sodass ein hoher Stromfluss bei sehr kleiner Restspannung möglich ist. In einem ausgeschalteten Schaltzustand ist hingegen die Schaltstrecke des Transistors hochohmig, das heißt, sie stellt einen hohen elektrischen Widerstand bereit, sodass auch bei hoher, an der Schaltstrecke anliegender elektrischer Spannung im Wesentlichen kein oder ein nur sehr geringer, insbesondere vernachlässigbarer Stromfluss vorliegt. Hiervon unterscheidet sich ein Linearbetrieb bei Transistoren, der aber bei getakteten Energiewandlern in der Regel nicht zum Einsatz kommt.

Es kann vorgesehen sein, dass der Gleichspannungszwischenkreis von einem Gleichspannungsnetz und/oder die mehrphasige Wechselspannung von einem mehrphasigen Wechselspannungsnetz bereitgestellt ist, welches zum Beispiel ein öffentliches Energieversorgungsnetz sein kann. Die mehrphasige Wechselspannung ist vorzugsweise eine dreiphasige Wechselspannung. Je nach Netzwerk kann es sich jedoch auch um eine zweiphasige Wechselspannung, eine vierphasige, fünfphasige Wechselspannung oder dergleichen handeln. Die Anzahl der Phasen der mehrphasigen Wechselspannung ist in der Regel von der Anwendung abhängig und nicht begrenzt.

Die Schaltelemente des Wechselrichters sind mit der Steuereinrichtung gekoppelt. Die Kopplung ist vorzugsweise derart ausgebildet, dass jedes der Schaltelemente individuell gesteuert werden kann. Die Steuereinrichtung kann als elektronische Schaltung ausgebildet sein, die entsprechende Steuersignale für die Schaltelemente bereitstellt, sodass der gewünschte Schaltbetrieb der Schaltelemente realisiert werden kann. Die elektronische Schaltung kann neben elektronischen Bauteilen zur vorgebbaren Bereitstellung der Steuersignale auch wenigstens eine programmgesteuerte Recheneinheit umfassen, um die gewünschte Funktion der Steuereinrichtung bereitstellen zu können. Natürlich kann die Steuereinrichtung auch ausschließlich aus der Rechnereinheit bestehen.

Die Steuereinrichtung ist ausgebildet, die Schaltelemente derart im Schaltbetrieb zu betreiben, dass der Energiewandler die vorgebbare Energiewandlungsfunktionalität bereitstellt. Ferner ist die Steuereinrichtung ausgebildet, Phasenströme der mehrphasigen Wechselspannung vorgebbar einzustellen. Die Steuereinrichtung stellt also eine Regelungsfunktionalität bereit, mittels der die Phasenströme in vorgebbarer Weise eingestellt werden können. Dadurch ist es möglich, an einer jeweiligen Phase den Phasenstrom in vorgebbarer Weise zu regeln. Zum Erfassen der Phasenströme können zum Beispiel geeignete Stromsensoren oder dergleichen genutzt werden. Die Stromsensoren können vom Energiewandler umfasst sein. Es kann jedoch auch vorgesehen sein, dass der Energiewandler Anschlüsse für die Stromsensoren aufweist, die zum Beispiel von dem entsprechenden elektrischen Wechselspannungsnetz umfasst sind, welches mit den geregelten Phasenströmen beaufschlagt werden soll.

Zum Regeln der Phasenströme ist es üblich, eine geeignete Regelungsfunktionalität bereitzustellen. Eine häufig genutzte Möglichkeit, die Phasenströme bereitzustellen, nutzt zum Beispiel eine feldorientierte Regelung unter Nutzung Raumzeigermodulation, die - je nach Ausgestaltung - gelegentlich auch als Vektorregelung bezeichnet wird und die für den dreiphasigen Fall auf einer Nutzung einer d/q-Transformation, auch Park-Transformation genannt, basiert. Die Park-Transformation dient dazu, dreiphasige Größen der elektrischen dreiphasigen Maschine in ein zweiachsiges Koordinatensystem zu transformieren, welches Bezugsachsen d und q aufweist. Hierdurch kann eine Vektorsteuerung beziehungsweise Vektorregelung realisiert werden, in der Raumzeigerdarstellungen zum Einstellen von Betriebszuständen des Wechselrichters genutzt werden können. Die d/q-Transformation ist verwandt mit einer Clarke-Transformation und unterscheidet sich von letzterer insbesondere dadurch, dass das d/q-Koordinatensystem der d/q-Transformation in einem stationären Betriebsfall mit einem Läufer der dreiphasigen elektrischen Maschine rotiert. In diesem Fall kann dann ein jeweiliges Wertepaar aus Werten d, q eine für diesen Betriebszustand zeitlich konstante Größe darstellen. Mittels der feldorientierten Regelung können Phasensollspannungen für jede der Phasen der mehrphasigen Wechselspannung bestimmt werden. Die Schaltsignale können dann abhängig von den Phasensollspannungen im Rahmen der Pulsweitenmodulation ermittelt werden.

Bei Wechselrichtern, die als Frequenzumrichter, insbesondere Netzwechselrichter, eingesetzt werden und dementsprechend an ein mehrphasiges Wechselspannungsnetz angeschlossen sind, sind üblicherweise über netzseitige Filter, insbesondere LCL-Filter, zum Glätten der Phasenströme beziehungsweise um einen Oberschwingungsgehalt von Phasenspannungen der mehrphasigen Wechselspannung und/oder leitungsgebundene Störungen so weit zu reduzieren, dass die jeweils gültigen Netzrichtlinien und/oder Netznormen eingehalten werden, angeschlossen. Solche Filter weisen in der Regel eine Kombination von Induktivitäten und Kapazitäten auf. Dies führt zu schwingungsfähigen Systemen, die Resonanzen ausbilden können. Deshalb werden Dämpfungselemente benötigt, um sehr große Resonanzüberhöhungen in einzelnen Frequenzbereichen im Bereich von Resonanzfrequenzen zu vermeiden. Klassisch werden hier als Dämpfungsglieder passive ohmsche Widerstände in eine Filterstruktur des Filters integriert, oder es werden parasitäre ohmsche Eigenschaften von Bauelementen für eine passive Dämpfung genutzt.

Nachteilig an dieser bewährten Dämpfungstechnik sind jedoch die entstehende Verlustleistung, die zu einem reduzierten Wirkungsgrad führt sowie der hiermit verbundene zusätzliche technische Aufwand für die Abfuhr von Verlustwärme, zusätzlicher Bauraum für die Dämpfungsglieder sowie die damit verbundenen zusätzlichen Kosten und schließlich auch eine verminderte Filterwirkung des Filters durch die passiven Dämpfungsglieder im eigentlich gewünschten Frequenzbereich des Filters, die die Kosten und den Bauraum nochmals vergrößern.

Der Erfindung liegt die Aufgabe zugrunde, Verfahren der gattungsgemäßen Art sowie Steuereinrichtungen und Energiewandler weiterzubilden, um einen Bedarf von Dämpfungsgliedern bei Filtern mit Induktivitäten und Kapazitäten zu reduzieren.

Als Lösung werden mit der Erfindung ein Verfahren, eine Steuereinrichtung sowie ein Energiewandler gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass dem Raumzeiger zum Bestimmen der Schaltsignale ergänzend ein Dämpfungsraumzeiger überlagert wird, der abhängig von einem Dämpfungssignal ermittelt wird, welches seinerseits abhängig von den Phasenströmen bestimmt wird, sodass Phasenlagen der Phasensollspannungen in Bezug auf wenigstens eine vorgegebene Frequenz, die größer als die Grundschwingung ist, um einen vorgegebenen Phasenwert verschoben werden.

In Bezug auf eine gattungsgemäße Steuereinrichtung wird mit der Erfindung insbesondere vorgeschlagen, dass die Steuereinrichtung ferner ausgebildet ist, dem Raumzeiger zum Bestimmen der Schaltsignale ergänzend ein Dämpfungsraumzeiger zu überlagern, der abhängig von einem Dämpfungssignal ermittelt wird, welches seinerseits abhängig von den Phasenströmen bestimmt ist, sodass Phasenlagen der Phasensollspannungen in Bezug auf wenigstens eine vorgegebene Frequenz, die größer als die Grundschwingung ist, um einen vorgegebenen Phasenwert verschoben werden.

In Bezug auf einen gattungsgemäßen Energiewandler wird mit der Erfindung insbesondere vorgeschlagen, dass die Steuereinrichtung gemäß der Erfindung ausgebildet ist.

Die Erfindung basiert unter anderem auf dem Gedanken, dass zur Reduktion von Dämpfungselementen eine Regelungsstruktur mit Filterung der vor der feldorientierten Regelung berechneten Sollspannung unter Berücksichtigung eines Dämpfungssignals verwendet werden kann. Die hierdurch erreichte Regelungsstruktur kann zum Beispiel ein digitales Filter aufweisen, wobei jedoch vorzugsweise keine Bandsperrfiltercharakteristik konfiguriert wird, und zwar auch nicht als Hoch- oder Tiefpass. Diese Auslegung vermeidet, dass eine Sperrfiltercharakteristik mit einem jeweiligen Sperrbereich zwar eine Anregung einer Resonanzstelle vermeiden könnte, wobei gleichzeitig jedoch eine resultierende Regelungscharakteristik eine Dämpfungswirkung bei externen Störanregungen im betroffenen Frequenzbereich verlieren würde. Durch die Phasenverschiebung der Phasenlagen der Phasenströme um den vorgegebenen Phasenwert in Bezug auf die wenigstens eine vorgegebene Frequenz kann erreicht werden, dass eine etwaige Anregung von wechselspannungsseitigen Resonanzen reduziert oder sogar verhindert werden kann, und zwar ohne dass Dämpfungselemente vorgesehen zu werden brauchen.

Dadurch können insbesondere die mit den Dämpfungselementen verbundenen Nachteile reduziert oder vermieden werden.

In der Regel können netzseitige Resonanzfrequenzen in Verbindung mit dem wechselspannungsseitigen Filter durch den Taktbetrieb des Wechselrichters angeregt oder verstärkt werden. Eine netzseitige Resonanzfrequenz ist in der Regel größer als eine Frequenz der Grundschwingung der Wechselspannung. Die vorgegebene Frequenz kann auch ein Frequenzbereich sein, der vorzugsweise oberhalb der Frequenz der Grundschwingung liegt. Tritt eine Resonanzwirkung auf, zeigt sich dies durch eine entsprechende Amplitude in den Phasenströmen bei dieser Frequenz. Derartige Resonanzfrequenzen können größer und/oder kleiner als eine der Taktperiode entsprechenden Frequenz sein. Die Steuereinrichtung ist vorzugsweise ausgebildet, das Verschieben der Phase für eine oder mehrere vorgegebene Frequenzen beziehungsweise Frequenzbereiche durchzuführen. Insbesondere kann vorgesehen sein, dass die Steuereinrichtung das Verschieben der Phase im Wesentlichen nicht für die Frequenz der Grundschwingung beziehungsweise einen die Frequenz der Grundschwingung umfassenden Bereich vornimmt.

Das Dämpfungssignal ist ein elektrisches Signal, welches mit dem Raumzeiger, der ebenfalls durch ein oder mehrere elektrische Signale gebildet sein kann, verknüpft werden kann. Beispielsweise kann zumindest teilweise eine Überlagerung, insbesondere eine Addition, vorgesehen sein.

Das Dämpfungssignal kann für jede Phase der Wechselspannung einen eigenen Wert aufweisen. Abhängig vom Dämpfungssignal wird mittels einer Dämpfungseinheit der Steuereinrichtung der Dämpfungsraumzeiger bestimmt. Die Dämpfungseinheit kann zum Beispiel ein digitales Filter aufweisen. Der Dämpfungsraumzeiger wird vorzugsweise als Clarke-Transformierte bereitgestellt. Das Überlagern mit dem Raumzeiger kann durch eine Verknüpfung erfolgen, die zum Beispiel eine Vektoraddition oder dergleichen umfassen kann. Ein Dämpfungsraumzeiger kann beispielsweise einer einzelnen Resonanzfrequenz zugeordnet sein. Der Dämpfungsraumzeiger seinerseits kann aus einer Überlagerung von mehreren einzelnen frequenzspezifischen Dämpfungsraumzeigern gebildet sein. Dadurch können mehrere auftretende Resonanzfrequenzen im Wesentlichen gemeinsam beziehungsweise zeitgleich behandelt werden. Hierfür brauchen bei der Erfindung jedoch keine Einstellungen vorgenommen zu werden. Die Erfindung ermöglicht es, sich dem Grunde nach selbst auf auftretende Resonanzfrequenzen anzupassen und diese zu unterdrücken.

Eine vorteilhafte Systemeigenschaft kann dabei sein, eine Abhängigkeit von Filterresonanzpunkten, beispielsweise in Bezug auf eine Frequenz- und Amplitudenüberhöhung, von Eigenschaften des Wechselspannungsnetzwerks, insbesondere in Bezug auf eine komplexe Netzimpedanz am Anschlusspunkt, zu reduzieren. Bei einem elektrischen Wechselspannungsnetz wie das öffentliche Energieversorgungsnetz kann die komplexe Netzimpedanz variieren, beispielsweise aufgrund von wechselnden weiteren elektrischen Einrichtungen, die ebenfalls elektrisch mit dem Wechselspannungsnetz gekoppelt sind. Das heißt, die Resonanzpunkte des Wechselspannungsnetzes können sich im Betrieb langsam oder sprunghaft ändern und sind demzufolge in der Regel weitgehend unbekannt. Darüber hinaus können auch weitere Netzfilter von weiteren Wechselrichtern am gleichen Anschlusspunkt des Wechselspannungsnetzes angeschlossen sein und, insbesondere abhängig von deren Betrieb, zu zusätzlichen oder veränderten Resonanzstellen im Gesamtsystem des Wechselspannungsnetzes führen.

Mit der Erfindung ist daher ein Verfahren und eine Steuereinrichtung zur aktiven Dämpfung, insbesondere eines LC(L)-Netzfilters, geschaffen, das die notwendige Dämpfungswirkung für eine variable Lage von einer oder mehreren Resonanzstellen breitbandig sicherzustellen vermag, vergleichbar einem realen ohmschen Widerstand als Dämpfungselement. Dabei vermeidet es die Erfindung, eine elektrische Spannung am Filter oder einen elektrischen Strom an einem Filterzweig messen zu müssen und diese beim Ermitteln des Raumzeigers zu berücksichtigen. Die Erfindung kommt ohne derartige Messungen aus. Sie basiert auf der Nutzung der Phasenströme, die für die Realisierung der feldorientierten Regelung ohnehin verfügbar sind. Ebenso braucht kein frequenzselektives Filter nach Art einer Bandsperre vorgesehen zu werden, welches wegen einer abhängig von der der Variation unterliegenden Netzresonanz einzustellenden Kerbfrequenz ohnedies unzweckmäßig wäre.

Die Erfindung kann sowohl in Analogtechnik als auch in digitaler Technik realisiert sein. Insofern kann die Steuereinrichtung eine analoge und/oder eine digitale Hardwareschaltung zur Realisierung der erfindungsgemäßen Funktion aufweisen. Dem Grunde nach könnte die Funktion auch mit einer programmgesteuerten Rechnereinheit realisiert sein. Vorzugsweise ist jedoch die Hardwareschaltung aufgrund der in der Regel schnelleren Reaktionszeit gegenüber der programmgesteuerten Rechnereinheit einzusetzen. Die Erfindung kann zum Beispiel nach Art eines ASIC, eines FPGA oder dergleichen realisiert sein. Insbesondere kann die Erfindung auch nachträglich bei bereits bestehenden Steuereinrichtungen beziehungsweise Konstruktionen von Steuereinrichtungen mit geringem Aufwand nachgerüstet werden. Ist eine Rechnereinheit vorgesehen, kann die Erfindung zumindest teilweise auch durch das Rechnerprogramm erfasst sein.

Die Erfindung eignet sich insbesondere für den Einsatz bei Netzwechselrichtern, wie sie beispielsweise durch die EP 3 576 284 A1 offenbart sind. Die Nutzung der Erfindung ist jedoch hierauf nicht beschränkt und kann unter anderem auch dann zum Einsatz kommen, wenn anstelle der mehrphasigen Wechselspannung eine elektrische Maschine mit dem Wechselrichter elektrisch gekoppelt ist. Besonders vorteilhaft kann die Erfindung mit einer PWM nach Art eines diskontinuierlichen Modulationsverfahrens kombiniert werden.

Gemäß der Erfindung brauchen daher nur breitbandige Filter und dagegen insbesondere keine Bandsperren eingesetzt zu werden, die auf die aktuelle Filterresonanz abgestimmt sein müssen und damit an veränderliche Netzparameter, insbesondere Resonanzfrequenzen, fortlaufend angepasst werden müssten. Damit kann beispielsweise mit einer festen Reglereinstellung bei einem großen Variationsbereich der Netzimpedanz gearbeitet werden.

Zusammengefasst kann sich die Erfindung insbesondere durch eine oder mehrere der folgenden Eigenschaften auszeichnen:

- Aktive Filterdämpfung ohne zusätzliche Messgrößen, sondern ausschließlich mit Hilfe von erfassten Wechselrichterströmen beziehungsweise Phasenströmen in den Phasen des mehrphasigen Wechselspannungsnetzes.
- Erweiterung des Stromregelkreises mit einem digitalen phasenkompensierenden Filter, insbesondere Lead-Lag-Glied höherer Ordnung beziehungsweise einem modifizierten Allpass mit einem geeigneten Phasengang,
- es wird kein Modell oder Beobachter in die feldorientierte Regelung eingebracht, wobei eine solche Komponente zumindest Teilkenntnisse über Parameter des mehrphasigen Wechselspannungsnetzes erfordern und somit die Robustheit der Regelung insgesamt gegenüber Schwankungen dieser unbekannten Parameter reduzieren würde,
- Integration der, vorzugsweise gesamten, Regelung in einen integrierten Schaltkreis, zum Beispiel ASIC oder dergleichen, der beinhaltet vorzugsweise eine Messwerterfassung und -verarbeitung, einen Stromregler, zumindest jedoch einen Proportionalregler, ein phasenkompensierendes, insbesondere digitales, Filter, beispielsweise 2.Ordnung, eine Berechnung der Schaltsignale im Modulator für die Raumzeigermodulation aufweist,
- Verwendung einer integrierenden Stromistwert-Erfassung, beispielsweise nach Art einer Sigma-Delta-Messung zur Ausblendung von hochfrequenten störenden Frequenzanteilen in der Strommessung, und/oder
- Verwendung einer Flat-Modulation zur Minimierung der Verlustleistung und zur Kompensation der daraus folgenden erhöhten Totzeit durch ein digitales Filter höherer Ordnung im Modulator.

Es wird ferner vorgeschlagen, dass die Phasenlagen voreilend verschoben werden. Dadurch kann eine gute Dämpfung der wenigstens einen Resonanz des Wechselspannungsnetzes erreicht werden. Das Voreilen der Phasenlagen ist vorzuweise derart gewählt, dass Reaktionszeiten der Steuereinrichtung, insbesondere in Bezug auf die feldorientierte Regelung, die Raumzeigermodulation und/oder das Erfassen der Phasenströme, berücksichtigt werden. Bei der Auslegung sollte eine ausreichende Phasenreserve berücksichtigt werden, damit eine Dämpfung von Resonanzfrequenzen auch bei hohen Resonanzfrequenzen beziehungsweise steifen Wechselspannungsnetzen zuverlässig erreicht werden kann.

Weiterhin wird vorgeschlagen, dass das Dämpfungssignal mittels einer Dämpfungseinheit bereitgestellt wird, durch die die wenigstens eine vorgegebene Frequenz bestimmt ist und die die Phasenströme auswertet und den Phasenwert abhängig vom Auswerten ermittelt. Die Dämpfungseinheit ist beispielsweise Teil der Steuereinrichtung. Die Dämpfungseinheit kann eine Filterfunktionalität bereitstellen, die das Verschieben der Phase, insbesondere das Voreilen der Phase, realisiert. Vorzugsweise wird das Dämpfungssignal für mehrere, insbesondere, alle Resonanzfrequenzen beziehungsweise einen oder mehrere Frequenzbereiche bereitgestellt. Dabei kann berücksichtigt werden, dass die Resonanzfrequenz von einer Zusammenwirkung des Wechselspannungsnetzes mit dem Filter abhängig sein kann. Das Dämpfungssignal braucht also nicht dauerhaft während des bestimmungsgemäßen Betriebs bereitgestellt zu werden. Es kann vorgesehen sein, dass die Phasenströme ausgewertet werden und abhängig davon bestimmt wird, ob ein Betriebszustand des Wechselrichters im Bereich einer Resonanzfrequenz vorliegt. Liegt ein derartiger Betriebszustand nicht vor, kann vorgesehen sein, das Dämpfungssignal zu deaktivieren. Mit dieser Weiterbildung kann eine Totzeit in der Regelung reduziert oder sogar vermieden werden.

Gemäß einer Weiterbildung wird vorgeschlagen, dass die erfassten Phasenströme mittels eines integrierenden Messverfahrens digitalisiert werden. Das integrierende Messverfahren kann zum Beispiel ein Sigma-Delta-Verfahren, ein Oversampling-Verfahren oder dergleichen sein. Bei dieser Weiterbildung ist eine zumindest teilweise digitale Signalverarbeitung vorgesehen. Das Sigma-Delta-Verfahren stellt ein integrierendes Verfahren zur Erfassung von Strömen bereit, sodass zum Beispiel Oberschwingungen bei der Erfassung reduziert werden können, die sich zum Beispiel beim Abtasten eines Signalwerts ergeben können, der vom jeweiligen Stromsensor beim Erfassen des jeweiligen Phasenstroms bereitgestellt wird. Beispielsweise kann ein 1-Bit-Signalstrom vorgesehen sein. Dem Grunde nach kann jedoch alternativ anstelle des Sigma-Delta-Verfahrens auch ein vergleichbares integrierendes Verfahren für die Digitalisierung eingesetzt werden. Insbesondere kann ein Messintervall mit sehr kleiner, insbesondere ohne, Totzeit erreicht werden.

Vorzugsweise ist eine Digitalisierungstaktperiode mindestens um einen Faktor 100, vorzugsweise mindestens um einen Faktor 1000, kleiner als die Taktperiode des Taktsignals. Die Digitalisierungstaktperiode entspricht einer Abtastrate beim Digitalisieren des Signalwerts. Dadurch dass die Digitalisierungstaktperiode erheblich kleiner als die Taktperiode des Taktsignals ist, kann trotz des integrierenden Abtastverfahrens eine genaue und zuverlässige Digitalisierung erreicht werden.

Gemäß einer Weiterbildung wird vorgeschlagen, dass als Pulsweitenmodulation eine diskontinuierliche Pulsweitenmodulation genutzt wird. Mit der diskontinuierlichen Pulsweitenmodulation können zum Beispiel Schaltverluste der Schaltelemente reduziert werden. Insbesondere eignet sich die diskontinuierliche Pulsweitenmodulation zum Einsatz bei Energiewandlern, mit denen eine große elektrische Leistung gewandelt werden soll.

Es wird weiterhin vorgeschlagen, dass für die erfassten Phasenströme einer Mittelwertbildung durchgeführt wird, die sich über wenigstens zwei Taktperioden des Taktsignals erstreckt. Dadurch kann die Verfahrensführung der Erfindung weiter verbessert werden. Mit dieser Ausgestaltung kann beispielsweise besonders vorteilhaft mit der diskontinuierlichen Pulsweitenmodulation kombiniert werden. Es ist möglich, dass Messwerte zu den Phasenströmen symmetrisch in Bezug auf die Pulsweitenmodulation, insbesondere das Taktsignal, erfasst werden können.

Ferner wird vorgeschlagen, dass das Erfassen der Phasenströme in jeweiligen Erfassungszeiträumen erfolgt, wobei sich ein jeweiliger der Erfassungszeiträume über eine jeweilige Taktperiode des Taktsignals erstreckt. Dadurch kann erreicht werden, dass erfasste Stromwerte der Phasenströme unmittelbar für das folgende Bestimmen der Schaltsignale genutzt werden können. Das Erfassen der Phasenströme erstreckt sich vorteilhaft über eine jeweilige Taktperiode des Taktsignals der Pulsweitenmodulation.

Darüber hinaus wird vorgeschlagen, dass die Phasenspannungen der mehrphasigen Wechselspannung vor dem Ermitteln des Raumzeigers erfasst werden, wobei ein Initialisieren der feldorientierten Regelung abhängig von den Phasenspannungen entsprechenden Spannungssignalen erfolgt. Dadurch kann, insbesondere wenn der Wechselrichter ein Netzwechselrichter ist, eine Synchronisation der feldorientierten Regelung mit der Wechselspannung erreicht werden.

Ferner wird vorgeschlagen, dass zum Bereitstellen des Dämpfungssignals eine Übertragungsfunktion genutzt wird, die zumindest im Bereich der wenigstens einen vorgegebenen Frequenz im Wesentlichen einen Verstärkungsfaktor in einem Bereich von etwa 1 aufweist. Die Resonanzfrequenz ergibt sich unter anderem aus einer Zusammenwirkung des die Wechselspannung bereitstellenden Wechselspannungsnetzes mit dem Filter, auch Netzfilter genannt, sowie gegebenenfalls weiterer angeschlossener elektrischer Einrichtungen. Zumindest innerhalb des Bereichs stellt die Steuereinrichtung die Übertragungsfunktion bereit, anhand der abhängig von den Phasenströmen das Dämpfungssignal bestimmt wird. Das Dämpfungssignal kann vorzugsweise ausschließlich abhängig von den Phasenströmen bestimmt werden. Eine Amplitude wird daher vorzugsweise beim Bestimmen des Dämpfungssignals möglichst wenig geändert. Im Unterschied dazu wird eine Phasenlage des Dämpfungssignals in geeigneter Weise bestimmt, sodass im Rahmen der Überlagerung mit dem Raumzeiger die gewünschte vorzugsweise Voreilung in der Phasenlage erreicht werden kann.

Vorzugsweise weist die Steuereinrichtung eine Phasenschieberschaltung zum Bereitstellen des Dämpfungssignals auf. Mit der elektronischen Phasenschieberschaltung kann die gewünschte Phasenverschiebung auf einfache Weise hardwaretechnisch erreicht werden. Die Phasenschieberschaltung kann zumindest teilweise durch die Dämpfungseinheit bereitgestellt sein. Eine Phasenschieberschaltung ist eine elektronische Schaltung, die die Phase einer elektrischen Schwingung verschiebt. Bei nacheilenden Phasenverschiebungen können elektronische Verzögerungsleitungen beziehungsweise Verzögerungsschaltungen eingesetzt werden. Bei voreilenden Phasenverschiebungen können, insbesondere bei periodischen Signalen, rückgekoppelte Phasenschleifen (englisch: Phase Locked Loop; PLL) oder dergleichen zum Einsatz kommen. Die Phasenschieberschaltung ermöglicht eine schnelle und genaue Einstellung einer gewünschten Phasenlage. Insbesondere kann die Phasenschieberschaltung als Lead-Lag-Glied ausgebildet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Die für das erfindungsgemäße Verfahren angegebenen Vorteile und Wirkungen gelten natürlich gleichermaßen auch für die erfindungsgemäße Steuereinrichtung und den erfindungsgemäßen Energiewandler und umgekehrt. Insofern können Verfahrensmerkmale auch als Vorrichtungsmerkmale und umgekehrt formuliert sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination sondern auch in anderen Kombinationen verwendbar, ohne den Rahmen der Erfindung zu verlassen.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Es zeigen:

FIG 1 eine schematische Schaltbilddarstellung eines an einem Wechselspanungsnetz angeschlossenen Energiewandler, der einen Wechselrichter, ein Filter zum elektrischen Koppeln des Wechselspannungsnetzes und eine Steuereinrichtung aufweist;

FIG 2 eine schematische Schaltbilddarstellung wie FIG 1, bei der das Filter als T-Filter ausgebildet ist und ein Stromsensor einen elektrischen Strom in einem Zweig des T-Filters erfasst;

FIG 3 eine schematische Schaltbilddarstellung wie FIG 2, bei der anstelle des elektrischen Stroms eine elektrische Filterspannung erfasst wird;

FIG 4 eine schematische Blockschaltbilddarstellung einer feldorientierten Regelung und einer Raumzeigermodulation der Steuereinrichtung, bei der ein Raumzeiger zusätzlich mittels einer Phasenschieberschaltung als aktiver Dämpfungsschaltung verarbeitet wird;

FIG 5 eine schematische Diagrammdarstellung eines frequenzabhängigen Verstärkungsverlaufs einer Übertragungsfunktion der Dämpfungsschaltung gemäß FIG 4;

FIG 6 eine schematische Diagrammdarstellung eines frequenzabhängigen Phasenverlaufs der Übertragungsfunktion der Dämpfungsschaltung gemäß FIG 4;

FIG 7 eine schematische Diagrammdarstellung eines frequenzabhängigen Verstärkungsverlaufs des offenen Regelkreises gemäß FIG 4 ohne die aktive Dämpfungsschaltung;

FIG 8 eine schematische Diagrammdarstellung eines frequenzabhängigen Phasenverlaufs offenen Regelkreises gemäß FIG 4 ohne die aktive Dämpfungsschaltung;

FIG 9 eine schematische Diagrammdarstellung wie FIG 7 mit der aktiven Dämpfungsschaltung;

FIG 10 eine schematische Diagrammdarstellung wie FIG 8 mit der aktiven Dämpfungsschaltung;

FIG 11 eine schematische Diagrammdarstellung wie FIG 5, bei der mittels dreier Graphen unterschiedliche Übertragungsfunktionen dargestellt sind;

FIG 12 eine schematische Diagrammdarstellung wie FIG 6, bei der mittels dreier Graphen unterschiedliche Übertragungsfunktionen wie in FIG 5 dargestellt sind;

FIG 13 eine schematische Blockschaltbilddarstellung der aktiven Dämpfungsschaltung gemäß FIG 4; und

FIG 14 eine schematische Diagrammdarstellung einer Clarke-Transformierten eines Raumzeigers mit einem überlagerten Dämpfungsraumzeiger.

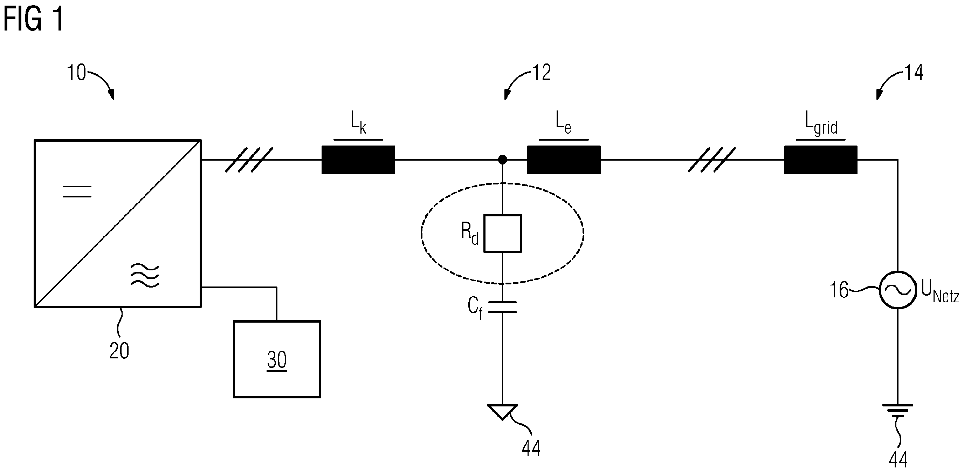

FIG 1 zeigt eine schematische Schaltbilddarstellung eines an einem Wechselspannungsnetz 14 angeschlossenen Energiewandlers 10, der einen Wechselrichter 20, ein Filter 12 zum elektrischen Koppeln des Wechselrichters 20 mit dem Wechselspannungsnetz 14 sowie eine Steuereinrichtung 30 aufweist. Das Wechselspannungsnetz 14 stellt vorliegend eine dreiphasige Wechselspannung 16 als mehrphasige elektrische Wechselspannung bereit. In alternativen Ausgestaltungen kann die Wechselspannung auch eine andere Anzahl an Phasen aufweisen.

Der Energiewandler 10 dient zum elektrischen Koppeln der dreiphasigen elektrischen Wechselspannung 16 des Wechselspannungsnetzes 14 mit einem Gleichspannungszwischenkreis 18, an dem eine Zwischenkreisgleichspannung 28 anliegt. Der Wechselrichter 20 weist für jede der Phasen der dreiphasigen Wechselspannung 16 wenigstens eine Reihenschaltung 22 aus Schaltelementen 24 auf. Eine jeweilige Reihenschaltung 22 ist mit dem Gleichspannungszwischenkreis 18 elektrisch verbunden. Ein jeweiliger Mittelanschluss 26 einer jeweiligen Reihenschaltung 22 ist mit einer jeweiligen Phase der dreiphasigen Wechselspannung 16 elektrisch gekoppelt. Wechselspannungsseitig ist am Wechselrichter 20 das Filter 12 angeschlossen, über das das elektrische Koppeln des Wechselrichters 20 mit der dreiphasigen Wechselspannung 16 erfolgt. Eine Steuereinrichtung 30 dient unter anderem zum Betreiben der Schaltelemente 24 des Wechselrichters 20, indem entsprechende Schaltsignale 40 bereitgestellt werden. In der vorliegenden Ausgestaltung ist vorgesehen, dass eine Taktrate für die Bereitstellung der Schaltsignale 40 etwa bei 4 kHz liegt. In alternativen Ausgestaltungen kann die Taktrate aber auch abweichend hiervon gewählt sein.

In der Darstellung gemäß FIG 1 ist das Wechselspannungsnetz 14 symbolisch durch eine dreiphasige Wechselspannungsquelle dargestellt, welche schematisch in Reihe mit einer Netzinduktivität $L_{grid}$ geschaltet ist. Die Netzinduktivität $L_{grid}$ stellt symbolisch eine induktive Wirkung des Wechselspannungsnetzes 14 dar.

Das Filter 12 ist vorliegend als T-Filter ausgebildet und weist eine Reihenschaltung aus zwei Induktivitäten auf, und zwar einer Induktivität $L_k$ sowie einer Induktivität $L_e$. Ein durch die Induktivität $L_e$ bereitgestellter Anschluss ist mit dem Wechselspannungsnetz 14 elektrisch verbunden. Ein durch die Induktivität $L_k$ bereitgestellter Anschluss ist mit den jeweiligen Phasenanschlüssen des Wechselrichters 20 elektrisch verbunden. Vorliegend sind die Induktivitäten $L_{grid}$, $L_k$, $L_e$ jeweils für jede Phase vorgesehen.

Jeweilige Mittelanschlüsse der Reihenschaltungen der Induktivitäten $L_k$ und $L_e$ sind mit einem Anschluss einer jeweiligen Reihenschaltung aus einem elektrischen Widerstand $R_d$ sowie einer elektrischen Kapazität $C_f$ verbunden. Mit ihren gegenüberliegenden Anschlüssen sind diese Reihenschaltungen an ein elektrisches Bezugspotential 44 angeschlossen, welches vorliegend ein Erdpotential ist.

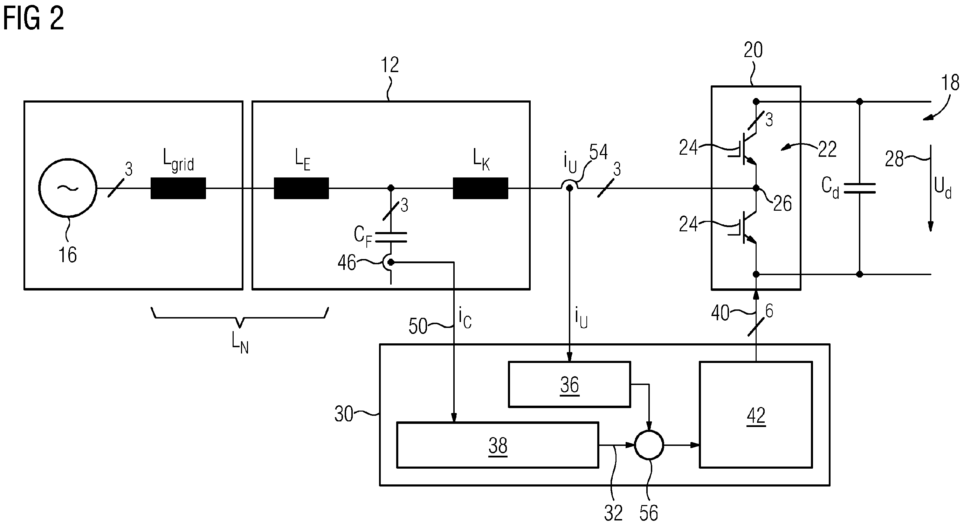

FIG 2 zeigt eine schematische Schaltbilddarstellung wie FIG 1, bei der ein elektrischer Stromsensor 46 in einem Zweig des T-Filters 12, der durch die jeweilige Reihenschaltung aus dem elektrischen Widerstand $R_d$ sowie der elektrischen Kapazität $C_f$ gebildet ist, einen elektrischen Strom erfasst und ein entsprechendes Stromsignal 50 für die Steuereinrichtung 30 zur Verfügung stellt. Diese Ausgestaltung ist für jede Phase der dreiphasigen Wechselspannung 16 separat vorgesehen. Die Stromsignale 50 der Stromsensoren 46 werden der Steuereinrichtung 30 zugeführt.

In FIG 2 ist ferner schematisch für eine der Phasen der dreiphasigen Wechselspannung 16 eine der Reihenschaltungen 22 mit ihren Schaltelementen 24 des Wechselrichters 20 dargestellt. Die Reihenschaltungen 22 sind für alle Phasen der dreiphasigen Wechselspannung 16 vorgesehen. Zu erkennen ist, dass die Reihenschaltungen 22 vorliegend als Halbbrückenschaltungen ausgebildet sind. In der vorliegenden Ausgestaltung ist ferner vorgesehen, dass die Schaltelemente 24 durch IGBT gebildet sind. In alternativen Ausgestaltungen können hier natürlich auch andere geeignete Schaltelemente vorgesehen sein.

Aus FIG 2 ist ferner ersichtlich, dass die Steuereinrichtung 30 eine Dämpfungsregelung 38 aufweist. Die Dämpfungsregelung 38 ist an die Stromsensoren 46 angeschlossen und enthält von den jeweiligen Stromsensoren 46 die entsprechenden Stromsignale 50. Ferner sind Stromsensoren 54 vorgesehen, mit denen jeweilige Phasenströme $i_U$ der dreiphasigen Wechselspannung 16 erfasst werden können. Die Stromsensoren 54 sind an eine feldorientierte Regelung 36 angeschlossen.

Die feldorientierte Regelung 36 ermittelt einen Raumzeiger 80, der mit einem Dämpfungssignal 32 der Dämpfungsregelung 38 mittels einer Verknüpfung 56 verknüpft wird. Dieses Signal wird dann einer Raumzeigermodulation 42 zugeführt, die die Schaltsignale 40 für die Schaltelemente 24 bereitstellt, sodass der gewünschte Schaltbetrieb mittels des Wechselrichters 20 erreicht werden kann.

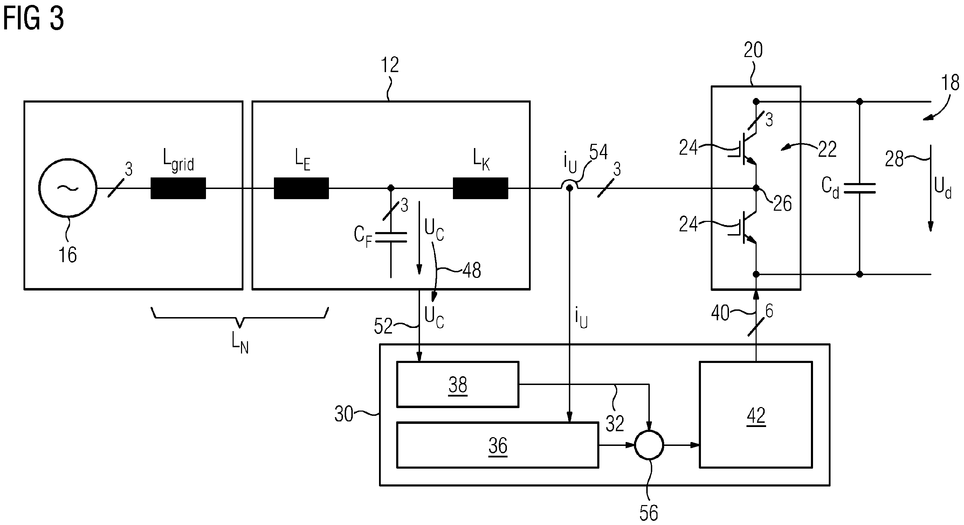

FIG 3 zeigt eine schematische Schaltbilddarstellung wie FIG 2, bei der anstelle des Erfassens des elektrischen Stroms mittels der Stromsensoren 46 für jede Phase eine elektrische Filterspannung mittels eines jeweiligen Spannungssensors 48 am jeweiligen Mittelanschluss der Induktivitäten $L_e$ sowie $L_k$ in Bezug auf das Bezugspotential 44 erfasst werden kann. Entsprechende Spannungssignale 52 werden wieder der Dämpfungsregelung 38 zugeführt. Der weitere Aufbau entspricht dem, wie er bereits zur FIG 2 erläutert wurde, weshalb ergänzend auf die diesbezüglichen Ausführungen verwiesen wird.

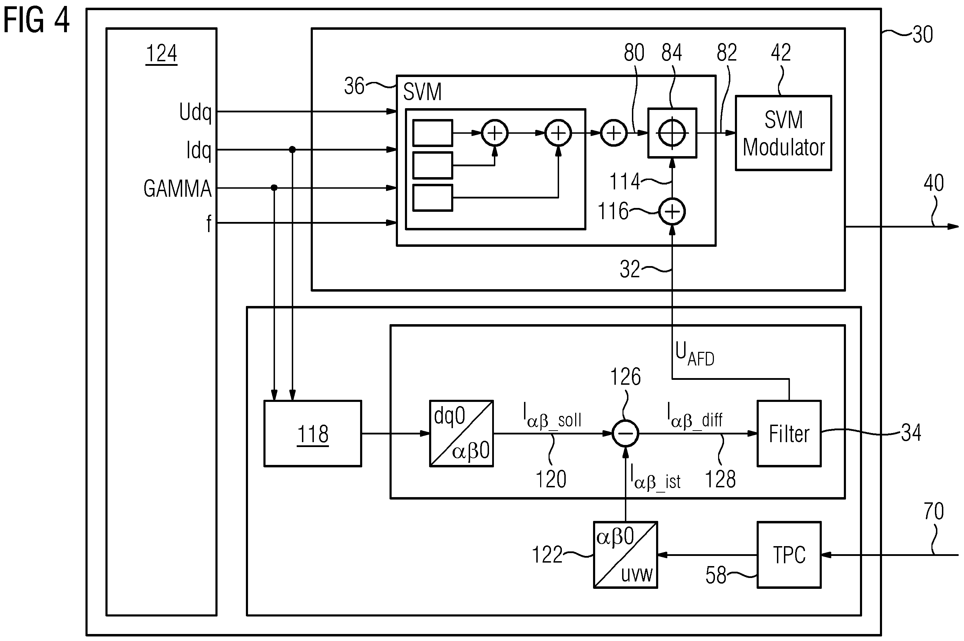

FIG 4 zeigt in einer schematischen Blockschaltbilddarstellung unter anderem einen Ausschnitt aus der Steuereinrichtung 30, wie sie in den FIG 1 bis 3 eingesetzt wird. Nicht dargestellt in FIG 4 ist, dass die erfasste Zwischenkreisgleichspannung 28 über einen Analog-Digital-Wandler einem nicht dargestellten Zwischenkreisregler zugeführt wird. Ebenso wird dem Zwischenkreisregler ein Vergleichswert für die Zwischenkreisgleichspannung 28 zugeführt.

Ebenfalls nicht dargestellt ist, dass Phasenspannungen der mehrphasigen Wechselspannung 16 erfasst und mittels eines weiteren Analog-Digital-Wandlers einer PLL-Schaltung zugeführt werden. Die PLL-Schaltung stellt ein Phasensignal bereit. Das Erfassen der Phasenspannungen braucht lediglich zur Betriebsaufnahme des bestimmungsgemäßen Betriebs des Energiewandlers 10 beziehungsweise des Wechselrichters 20 durchgeführt zu werden.

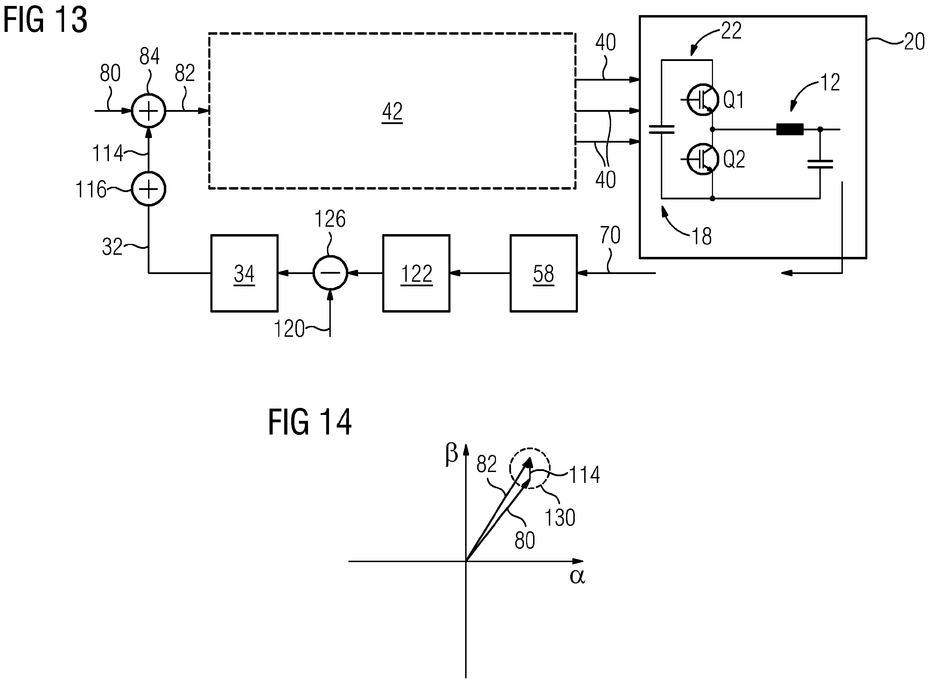

Schließlich werden Phasenströme 70 erfasst und mittels eines weiteren Analog-Digital-Wandlers 58 (FIG 13) einem nicht dargestellten Stromregler zugeführt. Hierfür können die Stromsensoren 54 genutzt werden. Dem Stromregler werden ferner auch die Werte $I_{d,ref}$, $I_{q,ref}$ sowie auch das Phasensignal zugeführt. Der Stromregler bestimmt aus den zugeführten Größen einen Raumzeiger 80.

Aus FIG 4 ist ersichtlich, dass der Raumzeiger 80 der Raumzeigermodulation 42 nicht unmittelbar sondern über eine Verknüpfungsschaltung 84 zugeführt wird. Die Verknüpfungsschaltung 84 verknüpft den Raumzeiger 80 mit einem Dämpfungsraumzeiger 114 nach Art einer Vektoraddition. Der Dämpfungsraumzeiger 114 dient dem Dämpfen von netzseitigen Resonanzfrequenzen während des bestimmungsgemäßen Betriebs des Energiewandlers 10 beziehungsweise des Wechselrichters 20.

Der Dämpfungsraumzeiger 114 wird mittels eines Signal-Raumzeiger-Wandlers 116 abhängig von einem Dämpfungssignal 32 ermittelt. Das Dämpfungssignal 32 wird seinerseits abhängig von den erfassten digitalisierten Phasenströmen 70 von einer Phasenschieberschaltung 34 als Dämpfungseinheit ermittelt. Die Verknüpfungsschaltung 84 verändert den Raumzeiger 80 hinsichtlich einer Phasenvoreilung und bestimmt hieraus einen voreilenden Raumzeiger 82. Der voreilende Raumzeiger 82 wird der Raumzeigermodulation 42 zugeführt, mittels der die Schaltsignale 40 für die Schaltelemente 24 des Wechselrichters 20 bestimmt werden.

Aus FIG 4 ist ersichtlich, dass die feldorientierte Regelung 36 auf einer dem Grunde nach bekannten feldorientierten Regelung basiert, weshalb vorliegend diesbezüglich von weiteren detaillierten Erläuterungen abgesehen wird. Die feldorientierte Regelung 36 ist mit einem Sollwert-Register 124 kommunikationstechnisch gekoppelt, welches in bekannter Weise Sollwerte für die feldorientierte Regelung 36 zur Verfügung stellt. Im Unterschied zum Stand der Technik wird der Raumzeiger 80 gemäß der Erfindung nicht unmittelbar der Raumzeigermodulation 42 zugeführt, sondern er wird zunächst mittels der Verknüpfungsschaltung 84 weiterverarbeitet, bevor er der Raumzeigermodulation 42 zugeführt wird.

Aus FIG 4 ist ferner ersichtlich, dass die erfassten Phasenströme 70 zunächst mittels des Analog-Digital-Wandlers 58 digitalisiert werden. Hierzu ist vorliegend vorgesehen, dass die erfassten Phasenströme 70 mittels eines Sigma-Delta-Verfahrens als integrierendem Messverfahren digitalisiert werden. Dabei ist eine Digitalisierungstaktperiode mindestens um einen Faktor 1000 kleiner als die Taktperiode des Taktsignals. Sodann wird im Rahmen der Digitalisierung vorgesehen, dass für die erfassten Phasenströme 70 eine Mittelwertbildung durchgeführt wird, die sich über zwei Taktperioden des Taktsignals erstreckt. Die digitalisierten Phasenströme 70 werden dann einem Clarke-Transformierer 122 zugeführt. Daraufhin werden die transformierten Phasenströme mittels einer Verknüpfungsschaltung 126 mit Sollwerten 120 für die Phasenströme verknüpft. Vorliegend wird eine Differenz gebildet und ein Differenzsignal 128 bereitgestellt. Das Differenzsignal 128 wird der Phasenschieberschaltung 34 zugeführt. Die Sollwerte 120 werden unter Nutzung eines mit dem Sollwert-Register 124 kommunikationstechnisch gekoppelten Blocks 118 bereitgestellt, der Stromsollwerte in dq-Koordinaten liefert. Die Funktion des Blocks 118 ist dem Fachmann bekannt, weshalb von weiteren detaillierten Ausführungen hierzu vorliegend abgesehen wird.

FIG 13 zeigt eine vergrößerte schematische Darstellung eines Ausschnitts aus FIG 4 im Bereich der Phasenschieberschaltung 34 und der Signalverarbeitung in Bezug auf den Raumzeiger 80. Zu erkennen ist, dass die erfassten Phasenströme 70 mittels des Analog-Digital-Wandlers 58 in digitale Signale umgewandelt werden. Für das Umwandeln wird vorliegend das Sigma-Delta-Verfahren genutzt.

Eine für das Sigma-Delta-Verfahren genutzte Digitalisierungstaktperiode ist vorliegend in einem Bereich von etwa 10 MHz bis etwa 20 MHz gewählt. Dadurch kann ein integrierendes Strommessverfahren bereitgestellt werden, welches sich vorteilhaft dazu eignet, Oberschwingungen, die durch Schalthandlungen entstehen, zu reduzieren. Die auf diese Weise digitalisierten Phasenströme 70 werden unter Differenzbildung mit den Sollwerten 120 der Phasenschieberschaltung 34 zugeführt.

Die Phasenschieberschaltung 34 liefert das Dämpfungssignal 32, welches umgewandelt als Dämpfungsraumzeiger 114 mittels der Verknüpfungsschaltung 84 mit dem Raumzeiger 80 verknüpft wird, damit der voreilende Raumzeiger 82 bereitgestellt werden kann. Dieser wird dann der Raumzeigermodulation 42 zugeführt, die hieraus in bekannter Weise die Schaltsignale 40 bestimmt.

Die Phasenschieberschaltung 34 ist vorliegend als Lead-Lag-Glied ausgebildet und ermöglicht, dass ein Phasengewinn erreicht wird. Damit ist es möglich, systembedingte Laufzeiten, wie sie beispielsweise bei der PWM, beim Verarbeiten der Signale, bei der Erfassung von Sensorwerten und/oder dergleichen auftreten können, auszugleichen. Darüber hinaus kann eine ausreichende Phasenreserve geschaffen werden, damit in Verbindung mit dem Filter 12 auftretende wechselspannungsnetzseitige Resonanzfrequenzen aktiv gedämpft werden können. Durch die Filterfunktion der Phasenschieberschaltung 34 wird ein Frequenzbereich vorgegeben, in dem auftretende Resonanzfrequenzen gedämpft werden können.

Im Folgenden soll anhand von Diagrammen die Funktion der Erfindung weiter erläutert werden. Ausgegangen wird von einem Energiewandler 10, der das Filter 12 und den Wechselrichter 20 aufweist, wobei eine Taktrate in Bezug auf die Bereitstellung der Schaltsignale 40 bei etwa 4 kHz liegt. Abhängig von der Netzinduktivität $L_{grid}$ und somit abhängig von einer relativen Netzkurzschlussspannung beziehungsweise einer hierzu invertierten Größe, und zwar einer relativen Netzkurzschlussleistung, die vorliegend zwischen etwa 5 und etwa 250 liegt, liegt eine Resonanzüberhöhung des Gesamtsystems einschließlich des Wechselspannungsnetzes 14 im vorliegenden Beispiel etwa zwischen 930 Hz und 1400 Hz.

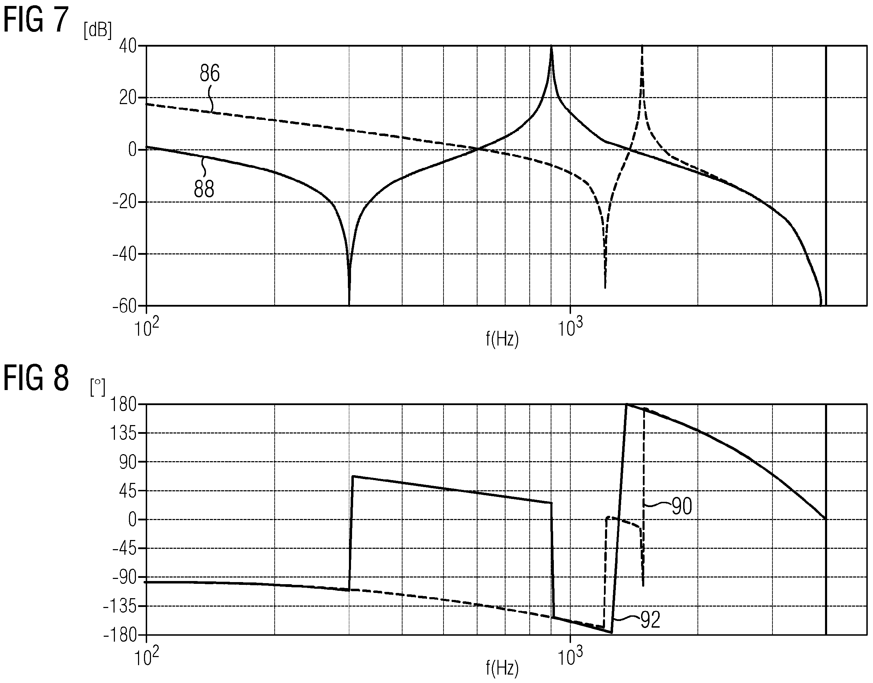

Dies ist anhand der FIG 7 und 8 dargestellt, die ein Bode-Diagramm darstellen. Eine Abszisse in den beiden schematischen Diagrammdarstellungen gemäß der FIG 7 und 8 ist der Frequenz zugeordnet, wohingegen in FIG 7 die Ordinate einer Amplitude und die Ordinate in FIG 8 einer Phase zugeordnet ist. Ein Graph 86 stellt einen Amplitudenverlauf über der Frequenz für eine relative Netzkurzschlussleistung RSC 250 dar, wohingegen ein Graph 88 einen Amplitudenverlauf für eine relative Netzkurzschlussleistung RSC 5 zeigt. Aus dem zugehörigen schematischen Phasendiagramm gemäß FIG 8 sind die entsprechenden Phasenverläufe ersichtlich, wohingegen ein Graph 90 dem Graphen 86 und ein Graph 92 dem Graphen 88 zugeordnet ist.

Anhand der Phasensprünge können die Resonanzstellen leicht erkannt werden. Aus den FIG 7 und 8 ist ersichtlich, dass mit zunehmender Größe der Netzinduktivität $L_{grid}$ eine Resonanzfrequenz des Filters 12 kleiner wird. Ein Phasengewinn ist hier erheblich kleiner beziehungsweise er kann sogar negativ werden. Durch die Systemlaufzeiten kann sich der Phasenverlust besonders bei kleinen Resonanzfrequenzen vergrößern. Die Systemlaufzeit, auch Totzeit genannt, berücksichtigt Laufzeiten des Regelkreises. Innerhalb einer Systemlaufzeit kann sich eine resonante Schwingung um eine Winkeländerung $\Delta\varphi$ weiterentwickeln beziehungsweise ändern, die unter anderem von der Resonanzfrequenz abhängt:

$$\Delta\varphi = t_{dead} * f_{resonanz}$$

wobei tdead die Systemlaufzeit und $f_{resonanz}$ die Resonanzfrequenz bezeichnet. Um die Systemlaufzeit im Regelkreis zu kompensieren und eine zur momentanen Phasenlage der Resonanzschwingung passende Dämpfungsaufschaltung berechnen zu können, müsste ein idealer digitaler Filter demzufolge eine entsprechende frequenzabhängige Korrektur der Phasenlage der Sollspannung durchführen. Allpässe wären hierfür grundsätzlich hinsichtlich ihrer Amplitudeneigenschaften geeignet, zeigen jedoch über den gesamten relevanten Frequenzbereich der Regelung keine geeigneten Eigenschaften beim Phasengang.

Dagegen kann mit der Phasenschieberschaltung 34, insbesondere wenn sie als Lead-Lag-Glied ausgebildet ist, die gewünschte Anpassung des Phasengangs beziehungsweise des frequenzabhängigen Phasenverlaufs erreicht werden, wobei zugleich unerwünschte Nebenwirkungen in Bezug auf einen Amplitudengang beziehungsweise einen frequenzabhängigen Amplitudenverlauf klein gehalten oder vermieden werden können.

In den FIG 7 und 8 ist die Funktion des offenen Regelkreises ohne Funktion der Phasenschieberschaltung 34 dargestellt. Es ist ersichtlich, dass bei einer Frequenz von etwa 1400 Hz der Frequenzgang eine Phasenlage von etwa -180° aufweist. Dieser Regelkreis ist daher im Bereich dieser Resonanzfrequenz instabil.

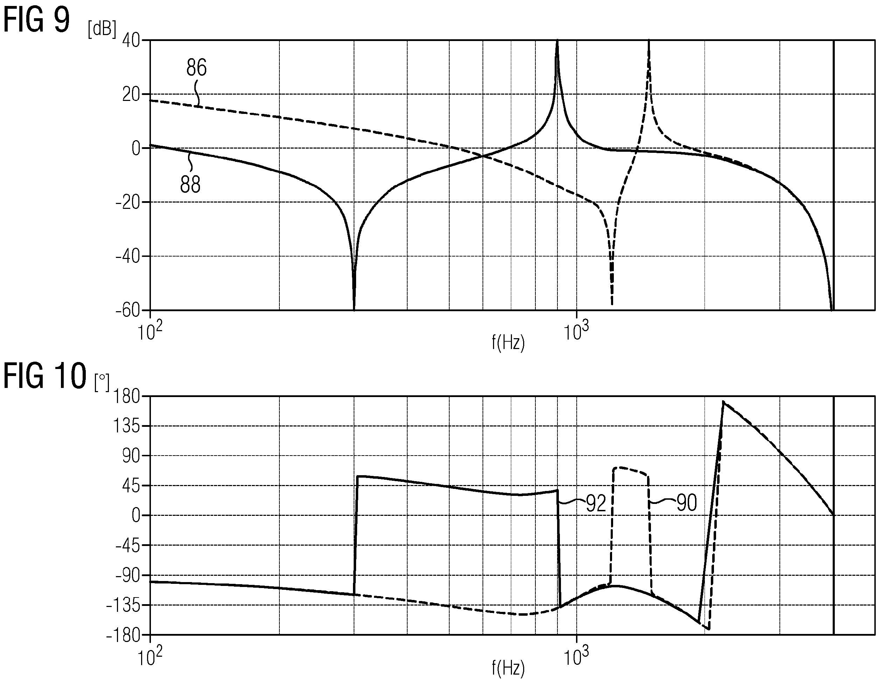

Die FIG 9 und 10 stellen ein entsprechendes Bode-Diagramm wie die FIG 7 und 8 in schematischer Darstellung dar. Bei dieser Darstellung ist der Regelkreis mit aktivierter Funktion der Phasenschieberschaltung 34 dargestellt. Wie anhand der Graphen 86 bis 92 ersichtlich ist, kann hier in den beiden dargestellten Fällen eine stabile Funktion auch im Bereich der Resonanzfrequenzen erreicht werden, weil eine ausreichende Phasenreserve bereitgestellt werden kann.

Im Folgenden werden Auslegungskriterien für die Phasenschieberschaltung 34 angegeben. Ein Auslegungskriterium ist, dass für die größte Resonanzfrequenz eine ausreichende Phasenvoreilung bereitgestellt werden soll. Darüber hinaus soll vorzugsweise ein möglichst linearer Phasenverlauf von der größten Resonanzfrequenz bis zur niedrigsten der Resonanzfrequenzen erreicht werden können, unter anderem damit die Systemlaufzeiten zumindest teilweise kompensiert werden können. Schließlich soll vorzugsweise eine Amplitudenerhöhung, insbesondere bei großen Frequenzen, möglichst klein gehalten werden, vorzugsweise in Annäherung an ein Allpass-Verhalten. Darüber hinaus ist es natürlich insbesondere vorteilhaft, Systemlaufzeiten durch einen entsprechenden laufzeitminimalen Aufbau des gesamten Regelkreises zu reduzieren. Aus diesem Grund ist die feldorientierte Regelung 36, vorzugsweise auch die Raumzeigermodulation 42, als Hardwareschaltung, insbesondere digitale Hardwareschaltung, beispielsweise nach Art eines ASIC, FPGA oder dergleichen, realisiert.

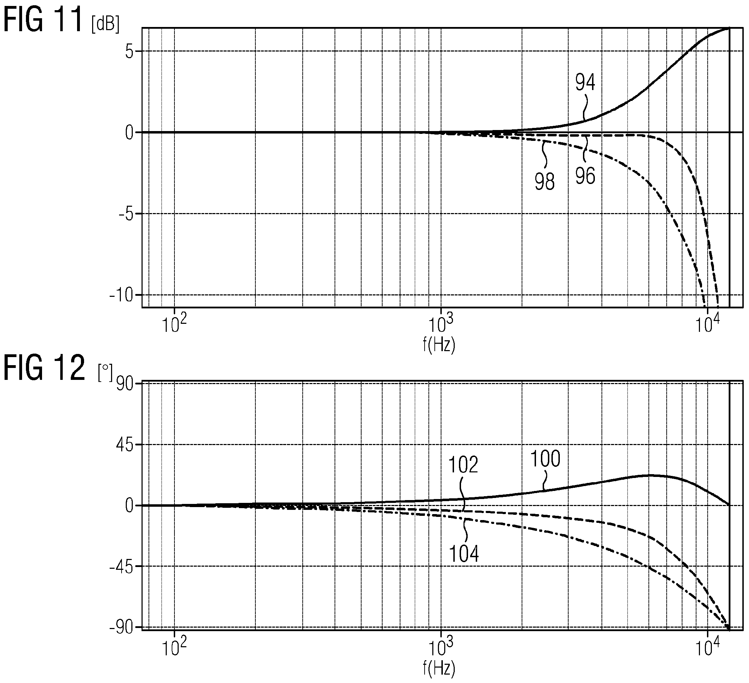

Mit den FIG 11 und 12 wird ein weiteres Bode-Diagramm in schematischer Darstellung gezeigt, welches eine Übertragungsfunktion der Phasenschieberschaltung 34 darstellt. Die Abszissen der schematischen Diagramme sind der Frequenz zugeordnet, wohingegen eine Ordinate der FIG 11 der Amplitude und einer Ordinate der FIG 12 einer Phase zugeordnet ist. Mit Graphen 94, 96, 98 sind drei unterschiedliche Amplitudenverläufe der Übertragungsfunktion dargestellt, wobei mit Graphen 100, 102 und 104 entsprechend zugeordnete Phasenverläufe der Übertragungsfunktion dargestellt sind.

In der vorliegenden Ausgestaltung ist ferner vorgesehen, dass als Raumzeigermodulation 42 vorliegend eine diskontinuierliche Modulation, auch Flat-Modulation genannt, realisiert ist. Hierbei handelt es sich um eine Variante der Raumzeigermodulation, bei der innerhalb eines Takts nur zwei von drei Phasen mittels der Schaltelemente geschaltet werden. Diese Modulationsart eignet sich daher besonders für den Einsatz bei Netzwechselrichtern, die bei hoher elektrischer Spannung, insbesondere an einer Grenze zur Übersteuerung, betrieben werden, wobei eine Reduktion von Schaltverlusten und eine Erhöhung des Wirkungsgrads erreicht werden können. Nachteilig ist jedoch, dass ein Stromverlauf nur symmetrisch zu einer vollständigen Pulsperiode ist. Mit der integrierenden Stromerfassung der Phasenströme 70 bei einer Taktrate von 4 kHz ist es vorteilhaft, entsprechend über einen Zeitraum von 250 µs zu mitteln. Bei anderen Modulationsarten kann dagegen eine Mittelung über einen Zeitraum von 125 µs, also einer halben Periode, ausreichend sein. Durch den hierbei bewirkten längeren Zeitraum im Rahmen der Mittelwertbildung ergibt sich eine größere Laufzeit im Dämpfungsregelkreis und damit eine geringere zulässige Schwankungsbreite beziehungsweise Phasenreserve im Bereich der Resonanzfrequenzen, wodurch sich ein kleinerer Stabilitätsbereich bei der Regelung insbesondere bei variierenden Netzparametern ergeben kann.

Mit der Phasenschieberschaltung 34, insbesondere wenn sie als Lead-Lag-Glied ausgebildet ist, ist es möglich, diese systembedingte zusätzliche Laufzeit zumindest teilweise wieder zu kompensieren, wie aus den FIG 11 und 12 ersichtlich ist. Die Graphen 94 und 100 zeigen dies anschaulich, für eine Phasenschieberschaltung 34, wohingegen die Graphen 98 und 104 die Funktion bei der vorgenannten Mittelung darstellen, und die Graphen 96 und 102 eine Kombination aus den beiden vorgenannten Optionen darstellen. Die Phasenschieberschaltung 34 wurde so parametriert, dass die zusätzliche Mittelung, wie zuvor erläutert, nahezu vollständig kompensiert und der hierauf basierende Phasenverlust dadurch erheblich reduziert werden kann.

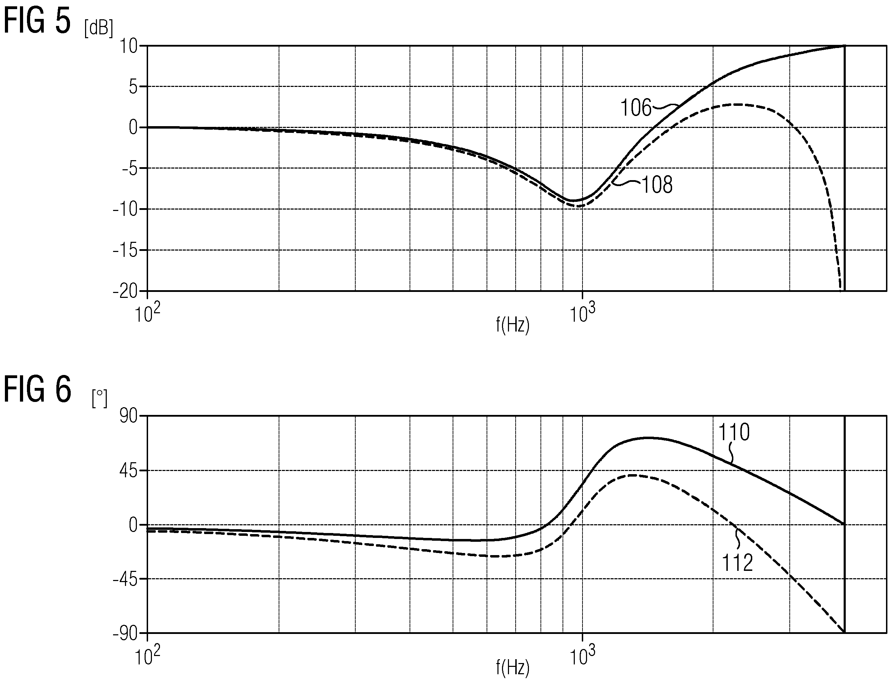

Die schematischen Diagrammdarstellungen gemäß der FIG 5 und 6 zeigen ein weiteres Bode-Diagramm, wobei die FIG 5 einen frequenzabhängigen Amplitudenverlauf und die FIG 6 einen frequenzabhängigen Phasenverlauf der Übertragungsfunktion der Phasenschieberschaltung 34 darstellen. Die Abszissen der FIG 5 und 6 sind wieder der Frequenz zugeordnet. Die Ordinate der FIG 5 ist der Amplitude und die Ordinate der FIG 6 ist der Phase zugeordnet. Die Filterübertragungsfunktion der Phasenschieberschaltung 34 ist anhand der Graphen 106 und 110 dargestellt. Anhand der Graphen 108 und 112 ist ersichtlich, dass die zusätzliche vorgenannte Filterung beziehungsweise Mittelung eine weitere Verbesserung der Übertragungsfunktion für die gewünschte Anwendung bereitzustellen vermag. Insbesondere kann im gewünschten Bereich nahezu ein etwa linearer Phasenanstieg bereitgestellt werden, wie dies anhand der schematischen Diagrammdarstellung gemäß FIG 6 ersichtlich ist. Dies erweist sich für die Funktion als besonders vorteilhaft.

FIG 14 zeigt in einer schematischen Diagrammdarstellung den Zusammenhang der Raumzeiger 80, 82, 114 als Clarke-Transformierte. Zu erkennen ist, dass der Raumzeiger 82 aus einer Vektoraddition des Raumzeigers 80 und des Dämpfungsraumzeigers 114 gebildet wird. Dabei ist ersichtlich, dass der Raumzeiger 80 eine erheblich kleinere Frequenz als der Dämpfungsraumzeiger 114 aufweist. Das heißt, während eines vergleichsweise langsamen Umlaufs des Raumzeigers 80 überlagert sich ein schneller Umlauf des Dämpfungsraumzeigers 114. Dies ist mit einem Kreis 130 in FIG 14 dargestellt. Dadurch ist anschaulich auch die Wirkung der Erfindung ersichtlich. Tritt keine Resonanzfrequenz auf, ergibt sich aufgrund der Funktion der Dämpfungseinheit im Wesentlichen auch kein signifikanter Dämpfungsraumzeiger 114. Tritt hingegen eine Resonanzfrequenz auf, liefert die Phasenschieberschaltung 34 beziehungsweise die Dämpfungseinheit einen geeigneten Dämpfungsraumzeiger 114, der es ermöglicht, der Resonanz entgegenzuwirken.

Insgesamt kann mit der Erfindung bei sinnvoller Auslegung folgendes erreicht werden:
Es kann eine aktive Dämpfung ohne zusätzliche Messgrößen erreicht werden, weil die Phasenschieberschaltung 34 lediglich die für den besitmmungsgemöäß0en Betrieb des Wechselrichters 20 ohnehin zu erfassenden Phasenströme 70 zur Funktion benötigt. Insbesondere brauchen keine separaten Phasenspannungen permanent erfasst zu werden.

Darüber hinaus braucht lediglich die Phasenschieberschaltung 34 vorgesehen zu werden. Es braucht insbesondere kein Modell oder kein Beobachter in den Regelkreis eingebracht zu werden. Diese Komponente würde im Übrigen ohnehin zumindest Teilkenntnisse über Parameter des Wechselspannungsnetzes 14 erfordern und somit die Stabilität der Regelung gegenüber Variationen dieser unbekannten Parameter reduzieren. Ferner kann der gesamte Regelkreis in einen Schaltkreis integriert werden, wie zum Beispiel das ASIC, das FPGA oder dergleichen. Diese integrierte Schaltung sollte vorzugsweise ferner eine Messwerterfassung und/oder Messwertverarbeitung sowie den Stromregler, ein phasenkompensiertes digitales Filter, vorzugsweise zweiter Ordnung, die Berechnung von Schalthandlungen in der Raumzeigermodulation 42 umfassen. Ferner kann vorzugsweise eine integrierende Erfassung der Phasenströme, insbesondere gemäß einem Sigma-Delta-Verfahren zur Ausblendung von beispielsweise hochfrequenten störenden Frequenzanteilen, in der Strommessung nutzen. Schließlich kann vorzugsweise eine diskontinuierliche Pulsweitenmodulation (PWM) zum Minimieren einer Verlustleistung und zur Kompensation von daraus folgenden Laufzeiten durch beispielsweise digitale Filter höherer Ordnung im Modulator eingesetzt werden.

Die Erfindung ermöglicht es, dass nur die Phasenströme 70 im Wechselrichter 20 als Messwerte benötigt werden. Insbesondere brauchen keine externen Ströme und Spannungen, zum Beispiel aus einem Netzfilter oder dem Netz, berücksichtigt zu werden

Insbesondere ist in einem weiten Bereich von Netzeigenschaften keine genaue Kenntnis von aktuellen Netzparameterwerten nötig. Der Regler der Erfindung ist robust gegenüber veränderten Netzeigenschaften; diese brauchen nicht bekannt zu sein.

Weiterhin benötigt der Regelkreis keine Bandpässe oder Sperrfilter, deren Sperrfrequenz genau auf momentane Netzeigenschaften angepasst werden müssten.

Auch wenn die Erfindung vorliegend anhand der Anwendung bei einer dreiphasigen Wechselspannung als mehrphasiger Wechselspannung erläutert ist, ist die Erfindung hierauf nicht beschränkt und kann bei beliebigen mehrphasigen Wechselspannungen zum Einsatz kommen, so zum Beispiel bei vier-, fünf-, oder sechsphasigen Wechselspannungen.

Die Ausführungsbeispiele dienen ausschließlich der Erläuterung der Erfindung und sollen diese nicht beschränken.

**Patentansprüche**

1. Verfahren zum Betreiben von Schaltelementen (24) eines Wechselrichters (20), der mit einer mehrphasigen Wechselspannung (16) eines Wechselspannungsnetzes (14) über ein wechselspannungsseitiges Filter (12) elektrisch gekoppelt ist, wobei der Wechselrichter (20) für jede der Phasen der mehrphasigen Wechselspannung (16) wenigstens eine Reihenschaltung (22) aus den Schaltelementen (24) aufweist, um die mehrphasige Wechselspannung (16) mit einem am Wechselrichter (20) angeschlossenen Gleichspannungszwischenkreis (18) elektrisch zu koppeln, indem die Schaltelemente (24) der Reihenschaltungen (22) mit Schaltsignalen (40) beaufschlagt werden, wobei die Schaltsignale (40) basierend auf einem Taktsignal unter Nutzung einer Pulsweitenmodulation ermittelt werden, zu welchem Zweck Phasenströme (70) von Phasen der mehrphasigen Wechselspannung (16) und eine Zwischenkreisgleichspannung (28) erfasst werden, wobei eine Taktperiode des Taktsignals kleiner als eine Schwingungsperiode einer Grundschwingung von Phasenspannungen der mehrphasigen Wechselspannung (28) ist, wobei abhängig von den erfassten Phasenströmen (70) und der erfassten Zwischenkreisgleichspannung (28) basierend auf einer feldorientierten Regelung (36) ein Raumzeiger (80) ermittelt wird und die Schaltsignale (40) abhängig vom Raumzeiger (80) mittels einer Raumzeigermodulation (42) und unter Nutzung von Phasensollspannungen bestimmt werden,
**dadurch gekennzeichnet, dass**
dem Raumzeiger (80) zum Bestimmen der Schaltsignale (40) ein Dämpfungsraumzeiger (114) überlagert wird, der abhängig von einem Dämpfungssignal (32) ermittelt wird, welches seinerseits abhängig von den Phasenströmen (70) bestimmt wird, sodass Phasenlagen der Phasensollspannungen in Bezug auf wenigstens eine vorgegebene Frequenz, die größer als die Grundschwingung ist, um einen vorgegebenen Phasenwert verschoben werden.

2. Verfahren nach Anspruch 1, **dadurch gekennzeichnet, dass** die Phasenlagen voreilend verschoben werden.

3. Verfahren nach einem der vorhergehenden Ansprüche, **dadurch gekennzeichnet, dass** das Dämpfungssignal (32) mittels einer Dämpfungseinheit (34) bereitgestellt wird, durch die die wenigstens eine vorgegebene Frequenz bestimmt ist und die die Phasenströme (70) auswertet und den Phasenwert abhängig vom Auswerten ermittelt.

4. Verfahren nach einem der vorhergehenden Ansprüche, **dadurch gekennzeichnet, dass** die erfassten Phasenströme (70) mittels eines integrierenden Messverfahrens digitalisiert werden.

5. Verfahren nach einem der vorhergehenden Ansprüche, **dadurch gekennzeichnet, dass** als Pulsweitenmodulation eine diskontinuierliche Pulsweitenmodulation genutzt wird.

6. Verfahren nach einem der vorhergehenden Ansprüche, **dadurch gekennzeichnet, dass** für die erfassten Phasenströme (70) eine Mittelwertbildung durchgeführt wird, die sich über wenigstens zwei Taktperioden des Taktsignals erstreckt.

7. Verfahren nach einem der vorhergehenden Ansprüche, **dadurch gekennzeichnet, dass** das Erfassen der Phasenströme (70) in jeweiligen Erfassungszeiträumen erfolgt, wobei sich ein jeweiliger der Erfassungszeiträume über eine jeweilige Taktperiode des Taktsignals erstreckt.

8. Verfahren nach einem der vorhergehenden Ansprüche, **dadurch gekennzeichnet, dass** die Phasenspannungen der mehrphasigen Wechselspannung (16) vor dem Ermitteln des Raumzeigers (80) erfasst werden, wobei ein Initialisieren der feldorientierten Regelung (36) abhängig von den Phasenspannungen entsprechenden Spannungssignalen erfolgt.

9. Verfahren nach einem der vorhergehenden Ansprüche, **dadurch gekennzeichnet, dass** zum Bereitstellen des Dämpfungssignals (32) eine Übertragungsfunktion genutzt wird, die zumindest im Bereich der wenigstens einen vorgegebenen Frequenz einen Verstärkungsfaktor in einem Bereich von 1 aufweist.

10. Steuereinrichtung (30) zum Betreiben von Schaltelementen (24) eines Wechselrichters (20), der mit einer mehrphasigen Wechselspannung (16) eines Wechselspannungsnetzes (14) über ein wechselspannungsseitiges Filter (12) elektrisch gekoppelt ist, wobei der Wechselrichter (20) für jede der Phasen der mehrphasigen Wechselspannung (16) wenigstens eine Reihenschaltung (22) aus den Schaltelementen (24) aufweist, wobei die Steuereinrichtung (30) ausgebildet ist,

    - die Schaltelemente (24) der Reihenschaltungen (22) mit Schaltsignalen (40) zu beaufschlagen, um die mehrphasige Wechselspannung (16) mit einem am Wechselrichter (20) angeschlossenen Gleichspannungszwischenkreis (18) elektrisch zu koppeln,
    - die Schaltsignale (40) basierend auf einem Taktsignal unter Nutzung einer Pulsweitenmodulation zu ermitteln, zu welchem Zweck Phasenströme (70) von Phasen der mehrphasigen Wechselspannung (16) und eine Zwischenkreisgleichspannung (28) erfasst werden, wobei eine Taktperiode des Taktsignals kleiner als eine Schwingungsperiode einer Grundschwingung von Phasenspannungen der mehrphasigen Wechselspannung (16) ist, und
    - abhängig von den erfassten Phasenströmen (70) und der erfassten Zwischenkreisgleichspannung (28) basierend auf einer feldorientierten Regelung (36) einen Raumzeiger (80) zu ermitteln und die Schaltsignale (40) abhängig vom Raumzeiger (80) mittels einer Raumzeigermodulation (42) und unter Nutzung von Phasensollspannungen zu bestimmen,
    **dadurch gekennzeichnet, dass**
die Steuereinrichtung (30) ferner ausgebildet ist,
    - dem Raumzeiger (80) ergänzend zum Bestimmen der Schaltsignale (40) ein Dämpfungsraumzeiger (114) zu überlagern, der abhängig von einem Dämpfungssignal (32) ermittelt wird, welches seinerseits abhängig von den Phasenströmen (70) bestimmt ist, sodass Phasenlagen der Phasensollspannungen in Bezug auf wenigstens eine vorgegebene Frequenz, die größer als die Grundschwingung ist, um einen vorgegebenen Phasenwert verschoben werden.

11. Steuereinrichtung nach Anspruch 10, **gekennzeichnet durch** eine Phasenschieberschaltung (34) zum Bereitstellen des Dämpfungssignals (32).

12. Energiewandler (10) zum elektrischen Koppeln einer mehrphasigen elektrischen Wechselspannung (16) eines Wechselspannungsnetzes (14) mit einem Gleichspannungszwischenkreis (18), mit

    - einem Wechselrichter (20), der für jede der Phasen der mehrphasigen Wechselspannung (16) wenigstens eine Reihenschaltung (22) aus den Schaltelementen (24) aufweist, wobei eine jeweilige Reihenschaltung (22) mit dem Gleichspannungszwischenkreis (18) elektrisch gekoppelt und ein jeweiliger Mittelanschluss (26) einer jeweiligen Reihenschaltung (22) mit einer jeweiligen Phase der mehrphasigen Wechselspannung (16) elektrisch koppelbar ist,
    - einem wechselspannungsseitigen Filter (12) zum elektrischen Koppeln des Wechselrichters (20) mit der mehrphasigen Wechselspannung (16), und
    - einer Steuereinrichtung (30) zum Betreiben der Schaltelemente (24) des Wechselrichters (20), **dadurch gekennzeichnet, dass**
die Steuereinrichtung (30) nach einem der Ansprüche 10 oder 11 ausgebildet ist.

FIG 1

FIG 2

FIG 3

# FIG 4

EP 4 358 390 A1

FIG 5

FIG 6

EP 4 358 390 A1

FIG 7

FIG 8

EP 4 358 390 A1

FIG 9

FIG 10

FIG 11

FIG 12

FIG 13

FIG 14

EP 4 358 390 A1

Europäisches
Patentamt

European
Patent Office

Office européen
des brevets

# EUROPÄISCHER RECHERCHENBERICHT

**Nummer der Anmeldung**

**EP 22 20 1841**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HAMAD MOSTAFA S ET AL: "A Shunt Active Power Filter for a Medium-Voltage 12-Pulse Current Source Converter Using Open Loop Control Compensation", IEEE TRANSACTIONS ON INDUSTRIAL ELECTRONICS, IEEE SERVICE CENTER, PISCATAWAY, NJ, USA, Bd. 61, Nr. 11, 1. November 2014 (2014-11-01), Seiten 5840-5850, XP011550319, ISSN: 0278-0046, DOI: 10.1109/TIE.2014.2311388 [gefunden am 2014-06-06] * Abschnitt I. INTRODUCTION; Abschnitt III. OPEN LOOP COMPENSATION PRINCIPLE:; Abschnitt IV. COMPENSATION OF DOMINANT CURRENT HARMONICS; Unterabschnitt III. A. Filter Current Generation; Unterabschnitt IV. B. Experimental Verification;; Abbildungen 2,3, 8, 11; Tabellen I, V * ----- | 1-12 | INV. H02M7/5387 H02M7/5395 H02M1/00 H02M1/12 H02M1/44 |
| X | KIM HYEON-SIK ET AL: "Resonance Suppression Method for Grid-Connected Converter With LCL Filter Under Discontinuous PWM", IEEE ACCESS, IEEE, USA, Bd. 9, 3. September 2021 (2021-09-03), Seiten 124519-124529, XP011877988, DOI: 10.1109/ACCESS.2021.3110251 [gefunden am 2021-09-13] * Zusammenfassung; Abbildung 9 * ----- -/-- | 1,10 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 9. März 2023 | Kanelis, Konstantin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes
Dokument

EPO FORM 1503 03.82 (P04C03)

Europäisches
Patentamt
European
Patent Office
Office européen
des brevets

**EUROPÄISCHER RECHERCHENBERICHT**

Nummer der Anmeldung

**EP 22 20 1841**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MIKKO ROUTIMO ET AL: "Comparison of Voltage-Source and Current-Source Shunt Active Power Filters", IEEE TRANSACTIONS ON POWER ELECTRONICS, INSTITUTE OF ELECTRICAL AND ELECTRONICS ENGINEERS, USA, Bd. 22, Nr. 2, 1. März 2007 (2007-03-01), Seiten 636-643, XP011172383, ISSN: 0885-8993, DOI: 10.1109/TPEL.2006.890005 * Zusammenfassung; Abbildung 3 * ----- | 1,10 | |
| X | FU XINGANG ET AL: "Implement Optimal Vector Control for LCL-Filter-Based Grid-Connected Converters by Using Recurrent Neural Networks", IEEE TRANSACTIONS ON INDUSTRIAL ELECTRONICS, IEEE SERVICE CENTER, PISCATAWAY, NJ, USA, Bd. 62, Nr. 7, 1. Juli 2015 (2015-07-01), Seiten 4443-4454, XP011581647, ISSN: 0278-0046, DOI: 10.1109/TIE.2015.2390140 [gefunden am 2015-05-15] * Zusammenfassung; Abbildung 4 * ----- | 1,10 | |
| A | CN 111 478 634 A (GUANGDONG MIDEA WHITE ELECTRICAL APPLIANCE TECH INNOVATION CENTER CO L) 31. Juli 2020 (2020-07-31) * Zusammenfassung; Abbildungen 4,7 * ----- | 1-12 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 9. März 2023 | Kanelis, Konstantin |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes
      Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    **EP 22 20 1841**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**09-03-2023**

| Im Recherchenbericht angeführtes Patentdokument | Datum der Veröffentlichung | Mitglied(er) der Patentfamilie | Datum der Veröffentlichung |
|---|---|---|---|
| CN 111478634    A | 31-07-2020 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3576284 A1